# EUROPEAN PATENT APPLICATION

(11) **EP 1 903 225 A2**
(43) Date of publication of application: **26.03.2008**
(21) Application number: 07112525.6
(22) Date of filing: 16.07.2007
(51) Int. Cl.: F16C 1/12

(54) **Rapid connection system for remote-control wires**

(30) Priority: 19.07.2006 IT MI20061398
(71) Applicant: Finan.Co S.A.S. di Bruno Barbieri & C., 20056 Trezzo sull'Adda (MI) (IT)
(72) Inventor: Barbieri, Walter, 20056 Trezzo Sull'Adda (Milano) (IT)
(74) Representative: De Gregori, Antonella

(57) **Abstract**

A rapid connection system (100) for remote control of the type comprising a flexible transmission wire (102) capable of axially passing inside a reaction sheath (104), wherein the reaction sheath (104) is integral, in correspondence with one of its ends, with a hollow cylindrical body (126) in which the flexible transmission wire (102) runs, whereas the flexible wire (102) itself is configured to be directly connected to the spool (108) of a remote-control drive box (106). The rapid connection system (100) comprises a reciprocal connection group (114) which slides axially in the direction of the flexible transmission wire (102) for connecting and constraining the reaction sheath (104) and the drive box (106), as well as clip-and/or wedge-releasable connection means (116) for the reciprocal connection between the flexible transmission wire (102) and the spool (108) of the drive box (106).

## Description

The present invention relates to a rapid connection system destined in particular for the connection of one or more metallic transmission wires to a remote-control drive box.

Remote control commands of the type comprising a flexible transmission wire which runs inside a protection sheath are normally used for the activation of oleodynamic valves, hydraulic distributors, mechanical reducers or other devices installed on particular vehicles, such as for example operating means for work-yards, agricultural machines or industrial machines in general.

In these remote-control commands, called "push-pull" or "pull" depending on the type of use for which they are destined, the ends of the sheathes are fixed in reaction points in a drive box, normally equipped with one or more control levers for the operator, and an element or device to be driven, situated on the machine at a certain distance from the above drive box, so that it is possible to act on the transmission wire or wires in turn respectively connected to the drive box and device to be driven.

In current remote-control systems according to the known art, numerous elements are necessary for effecting the connection of each transmission wire to the relative drive box, said elements being assembled in sequence with the help of particular tools.

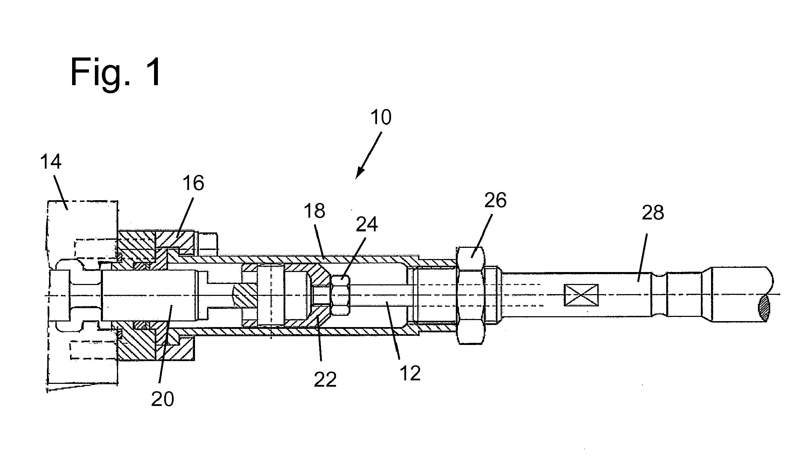

A connection system of the known type, for example, illustrated in figure 1 of the enclosed drawings, envisages the use of fixing flanges, threaded sleeves and numerous clamping nuts having different diameters which must be assembled according to a pre-established order, with or without the help of possible sealing rings between the parts, to obtain the connection and contact of the transmission wire to the corresponding drive box.

An objective of the present invention is therefore to provide a rapid connection system, in particular for the remote control of operating machines, which considerably reduces the number of elements necessary for the connection of one or more transmission wires to the drive box and consequently also reduces the production costs of the overall remote-control system.

Another objective of the invention is to provide a rapid remote-control connection system capable of simplifying the connection operation of the transmission wire or wires on the relative drive box, reducing the assembly times and not requiring any type of tool for completing said operation.

A further objective is to provide a rapid connection system for remote-control which is substantially simple, safe and reliable.

These and other objectives according to the present invention are achieved by providing a rapid connection system, destined in particular for the insertion of one or more transmission wires on a remote-control drive box, as specified in claim 1.

Further characteristics of the invention are indicated in the subsequent claims.

The characteristics and advantages of a rapid connection system for remote-control according to the present invention will appear more evident from the following illustrative and non-limiting description, referring to the enclosed schematic drawings, in which:
figure 1 is a longitudinal sectional view of a portion of a remote control equipped with a connection system of the known type between a transmission wire and the relative drive box;
figure 2 is a longitudinal sectional view of a portion of a remote connection equipped with a rapid connection system according to the present invention, in which an intermediate phase of the contact operation is illustrated; and
figure 3 is a longitudinal sectional view of the rapid connection system illustrated in figure 2, in a completed assembly configuration.

With reference in particular to figure 1, a connection system 10 according to the known art is illustrated, which allows a transmission wire 12, normally made of metal, to be connected to the relative drive box 14.

The connection system 10 of the known type illustrated in figure 1 comprises a fixing flange 16 bolted to the drive box 14, said fixing flange 16 being configured to irremovably withhold a sleeve 18 inside which the transmission wire 12 is joined to a connection means or spool 20 which transmits the commands provided by the control lever (not shown) of the box 14 to the wire 12 itself to activate the device being driven. In particular, the above joining between the transmission wire 12 and the spool 20 is effected by means of a coupling element 22 equipped with a suitable clamping nut 24.

The sleeve 18 is in turn provided with a threaded end portion on which the metallic ferrule 28, in which the transmission wire 12 runs and with which the protection sheath (not shown) which envelops the wire 12 itself is integral, is inserted by means of a second clamping nut 26 having a larger diameter with respect to that of the nut 24.

In order to effect the coupling of the transmission wire 12 to the drive box 14 during the remote control assembly phase, using the known connection system 10 of figure 1, it is consequently necessary to connect and fix the above-mentioned elements to each other following a pre-established order. It is therefore evident that this type of connection system 10 requires a considerable amount of time and the use of various tools, among which, for example, two different spanners for clamping the nuts 24 and 26 having a different diameter, to complete the assembly phase.

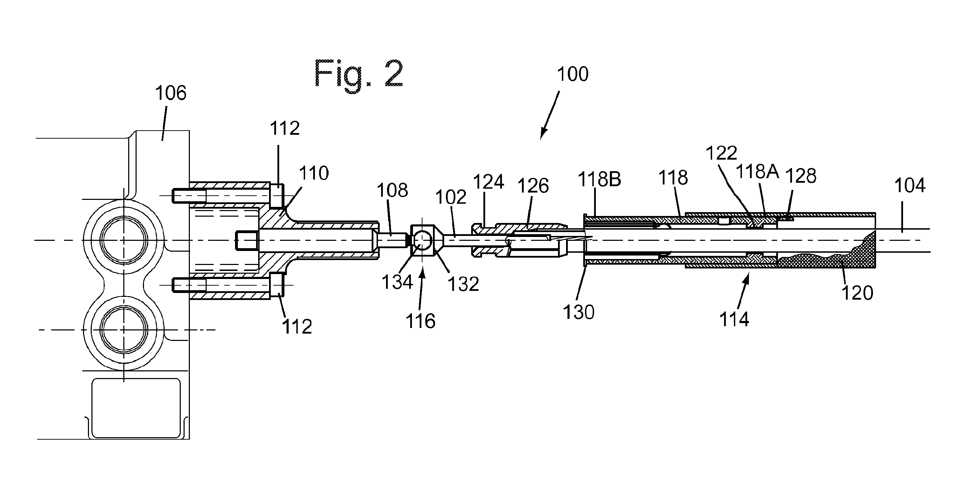

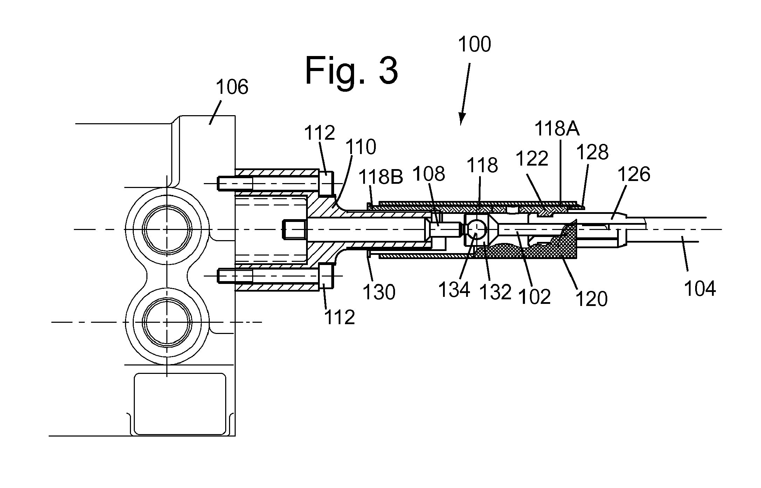

With combined reference to figures 2 and 3, these, on the other hand, show a preferred embodiment example of a rapid connection system according to the present invention, indicated as a whole with the reference number 100. The rapid connection system 100 allows a flexible transmission wire 102, preferably metallic and capable of axially passing inside a reaction sheath 104, to be connected and kept firmly in position on a drive box 106, such as, for example, a hydraulic distributor assembled on an operating machine and equipped with one or more control levers (not shown) capable of driving, by means of the wire 102, various devices assembled on the operating machine itself.

More specifically, the transmission wire 102 is configured so as to be directly connected to the spool 108 of the drive box 106, said spool 108 being made of steel and being capable of passing inside a hollow body 110, preferably made of aluminum, which is preassembled on the body of the drive box 106 by means of two or more screws 112 or with analogous fixing means.

The rapid connection system 100 according to the invention therefore comprises a reciprocal connection group 114, which slides axially in the direction of the transmission wire 102, to connect and constrain the reaction sheath 104 of the transmission wire 102 and the hollow body 110 integral with the drive box 106, in addition to clip- and/or wedge-releasable connection means 116 for the reciprocal connection between the transmission wire 102 and the spool 108.

In particular, according to the embodiment example illustrated in figures 2 and 3, the reciprocal connection group 114 comprises, in turn, a first body substantially in the form of a sleeve 118 made of a plastic material, for example acetal resin, capable of running in the axial direction of the wire 102 to connect the reaction sheath 104 with the hollow body 110, once the internal connection between the wire 102 and the spool 108 has been effected, and a second body substantially in the form of sleeve 120, preferably metallic, which runs coaxially on the first sleeve 118 to at least partially envelop it and possibly rotatingly connect therewith, thus blocking it in position and constraining the sheath 104 to the hollow body 110.

On the internal surface of the connection sleeve 118, in correspondence with one of its ends 118A facing the opposite side with respect to the drive box 106, there is an annular protuberance 122 suitable for wedge-insertion in a corresponding groove 124 situated on a hollow cylindrical body 126, normally a steel ferrule, which forms the end portion of the sheath 104, i.e. the portion destined for the connection of the sheath 104 with the respective reaction point of the drive box 106, in this case the hollow body 110.

The opposite end 118B of the sleeve 118, i.e. that facing the drive box 106, on the other hand, forms a connecting and constraining portion with the outer surface of the hollow body 110, said constraint with said outer surface of the hollow body 110 being obtained by pressure coupling, or wedge-coupling or by suitable threadings situated on the contact surfaces.

Again in correspondence with the end 118A of the connection sleeve 118, there can be one or more blocking teeth 128 radially facing outwards, destined for keeping the sleeve 120 in position once it has been wound around the first sleeve 118 to effect the connection between the ferrule 126 of the sheath 104 and the hollow body 110 integral with the drive box 106. The opposite end portion 118B, on the other hand, has a terminal buffer edge 130, with a radial development, whose function is to prevent the blocking sleeve 120 which is wound around the connection sleeve 118 from possibly sliding beyond the latter in the direction of the drive box 106. As a result, in this particular embodiment, the overall length of the outer sleeve 120 is lesser than or equal to the overall length of the sleeve 118.

In addition or alternatively to the teeth 128 for the clip-blocking of the outer sleeve 120 around the connection sleeve 118, the reciprocal engagement between these two elements 118 and 120 can also be obtained by means of suitable threadings situated thereon, by bayonet insertion or with other analogous systems.

According to the invention, the releasable connection means 116 for obtaining the reciprocal connection between the transmission wire 102 and the relative driving spool 108 envisage, on the other hand, a female connection element 132, situated, in the example illustrated, on the end portion of the wire 102, and a corresponding male connection element 134 situated on the opposite component, in this case the spool 108 which protrudes from the drive box 106. The male 134 and female 132 connection elements, which in the specific example of the embodiment described herein respectively consist of a spherical protuberance and a relative suitably shaped groove, both made of steel and formed in a single piece with the respective components to be connected, are conformed for the pressure insertion of one inside the other so as to prevent the accidental decoupling in an axial direction of the transmission wire 102 from the spool 108 and consequently of the remote control driving lever from the device to be driven.

In order to effect the assembly of the remote control when operating, for example during the preparation of the machine which is to receive it, using the rapid connection system 100 according to the present invention, the following procedure is substantially adopted.

The connection of the transmission wire 102 to the spool 108, whose end portion protrudes from the hollow body 110 already preassembled on the drive box 106 during its manufacturing, is first effected by inserting the spherical protuberance 134 into its corresponding cavity 132. It is therefore evident that, already in this first assembly phase, it is possible to obtain a connection even if not definitive, between the driving organ of the box 106 and the device to be driven situated at the opposite end of the wire 102 without the necessity of using any specific tool.

Once the transmission wire 102 has been connected to the driving organ so that said wire 102 can run axially to activate the device to be driven, the sheath 104 is made integral with the reaction point of the box 106, i.e. with the hollow body 110 preassembled on the box 106 itself. In order to effect this operation, the connection sleeve 118 is axially moved along the sheath 104 in the direction of the drive box 106, starting from the configuration illustrated in figure 2, until the wedge-engagement is obtained between the annular protuberance 122 of the sleeve 118 and the corresponding groove 124 situated on the end ferrule 126 of the sheath 104.

If the registration of the remote control as a whole has been appropriately effected, so as to obtain the correct reciprocal positioning of all the components of the entire control system when it is in rest position, the pressure-insertion is obtained of the portion 118B of the sleeve 118 around the respective contact surface of the hollow body 110 contextually with the insertion between the protuberance 122 and the groove 124, thus obtaining a first constraining bond between the sheath 104 and the reaction component 110 of the drive box 106.

In order to definitively fix the sheath 104 to the drive box 106, the blocking sleeve 120 is then moved in the axial direction of the wire 102 to superimpose said sleeve 120 with respect to the connection sleeve 118, enveloping it. Thanks to the compression force which the blocking sleeve 120 exerts on the internal connection sleeve 118, together with the presence of stop means 130, clip means 128 and other possible constraining means, for example specific threadings, between the two sleeves 118 and 120, the connection and firm and safe fixing of the sheath 104 is effected on the corresponding reaction element 110 of the drive box 106, at the same time preventing the accidental disengagement of the reciprocal connection means 116 between the transmission wire 102 and the spool 108, as said means 116 are enclosed and protected by the two sleeves 118 and 120 (figure 3).

All of the above assembly operations are in any case reversible, again without the necessity of using any type of tool, if the maintenance of the overall remote-control system and/or substitution of one or more components is required.

From what is specified above, it can therefore be observed that the rapid connection system according to the present invention, destined in particular for the connection of one or more transmission wires on the remote-control drive box for operating machines, achieves the objectives indicated above.

In particular, the objective is achieved of obtaining a rapid connection system in which the number of components necessary for the assembly is reduced to the minimum, said components not requiring any specific tool for their operating assembly, with obvious economical advantages.

Furthermore, the assembly of the above components is simpler and more rapid with respect to the known systems, especially in the case of transmission wires extremely close to each other, which must be connected to the same drive box, where it is difficult to correctly assemble all the pieces with the help of suitable tools.

It should in any case be pointed out that the rapid connection system according to the present invention, described in one of its preferred but non-limiting embodiments, can undergo numerous modifications and variants, all included in the same inventive concept. The form, arrangement and material of the sleeves described above can, for example, vary according to their destination of use.

Finally, the proportions and dimensions of the components illustrated can also vary as required and according to technical demands.

## Claims

1. A rapid connection system (100) for remote control of the type comprising a flexible transmission wire (102) capable of axially passing inside a reaction sheath (104), said reaction sheath (104) being integral, in correspondence with one of its ends, with a hollow cylindrical body (126) in which said flexible transmission wire (102) runs, said flexible wire (102) being configured to be directly connected to a spool (108) of a drive box (106) of said remote control, **characterized in that** it comprises a reciprocal connection group (114) which slides axially in the direction of said flexible transmission wire (102) for connecting and constraining said reaction sheath (104) and said drive box (106), as well as clip- and/or wedge-releasable connection means (116) for the reciprocal connection between said flexible transmission wire (102) and said spool (108).

2. The rapid connection system (100) according to claim 1, **characterized in that** said clip- and/or wedge-releasable connection means (116) comprise at least one female connection element (132), formed in a single piece with said flexible transmission wire (102) or with said spool (108), and at least one corresponding male connection element (134), formed in a single piece with the opposite component between said flexible transmission wire (102) and said spool (108).

3. The rapid connection system (100) according to claim 1, **characterized in that** said reciprocal connection group (114) comprises a first body substantially in the form of a sleeve (118), capable of moving in the axial direction of said flexible transmission wire (102) to connect said reaction sheath (104) with said drive box (106), and a second body substantially in the form of a sleeve (120), which coaxially moves on said first sleeve (118) to at least partially envelop it and attach itself thereto, thus blocking said first sleeve (118) in position by constraining said reaction sheath (104) to said drive box (106).

4. The rapid connection system (100) according to claim 3, **characterized in that** said first sleeve (118) has at least one annular protuberance (122) on its internal surface, in correspondence with its end (118A) facing from the opposite side with respect to said drive box (106), said annular protuberance (122) being suitable for wedge-insertion into at least one corresponding groove (124) situated on said hollow cylindrical body (126).

5. The rapid connection system (100) according to claim 3, **characterized in that** the end (118B) of said first sleeve (118) facing towards said drive box (106) forms a connection and constraining portion with the outer surface of a hollow body (110), preassembled on said drive box (106) and in which said spool (108) moves.

6. The rapid connection system (100) according to claim 5, **characterized in that** said constraint between said end (118B) of said first sleeve (118) and said outer surface of said hollow body (110) is produced by pressure-coupling.

7. The rapid connection system (100) according to claim 5, **characterized in that** said constraint between said end (118B) of said first sleeve (118) and said outer surface of said hollow body (110) is produced by wedge-insertion.

8. The rapid connection system (100) according to claim 5, **characterized in that** said constraint between said end (118B) of said first sleeve (118) and said outer surface of said hollow body (110) is produced by threadings situated on the contact surfaces.

9. The rapid connection system (100) according to claim 3, **characterized in that** said first sleeve (118) has one or more blocking teeth (128) radially facing outwards in correspondence with its end (118A) facing from the opposite side with respect to said drive box (106), said blocking teeth (128) being destined to keeping said second sleeve (120) firmly in position following insertion on said first sleeve (118).

10. The rapid connection system (100) according to claim 3, **characterized in that** said first sleeve (118) has an end stop edge (130) with a radial development in correspondence with its end (118B) facing towards said drive box (106), said end stop edge (130) preventing the possible sliding of said second sleeve (120) beyond said first sleeve (118).

11. The rapid connection system (100) according to claim 3, **characterized in that** the insertion of said second sleeve (120) on said first sleeve (118) is obtained by means of bayonet insertion.

12. The rapid connection system (100) according to claim 3, **characterized in that** the insertion of said second sleeve (120) on said first sleeve (118) is obtained by means of threadings situated on the contact surfaces.

13. The rapid connection system (100) according to claim 3, **characterized in that** said first sleeve (118) is made of a plastic material.

14. The rapid connection system (100) according to claim 3, **characterized in that** said second sleeve (120) is made of metal.
